# EUROPÄISCHE PATENTSCHRIFT

(11) **EP 1 238 213 B1**
(45) Veröffentlichungstag und Bekanntmachung des Hinweises auf die Patenterteilung: **11.06.2003**
(21) Anmeldenummer: 00985011.6
(22) Anmeldetag: 11.11.2000
(51) Int. Cl.: F16H 57/04

(54) **SCHMIERMITTELZUFUHR EINES PLANETENTRIEBES**
DEVICE FOR SUPPLYING LUBRICANT TO A PLANETARY DRIVE
DISPOSITIF POUR ALIMENTER EN LUBRIFIANT UN TRAIN PLANETAIRE

(30) Priorität: 14.12.1999 DE 19960157
(43) Veröffentlichungstag der Anmeldung: 11.09.2002
(73) Patentinhaber: INA-Schaeffler KG, 91074 Herzogenaurach (DE)
(72) Erfinder: WILDESHAUS, Walter, 91074 Herzogenaurach (DE)
(86) Internationale Anmeldenummer: EP0011180
(87) Internationale Veröffentlichungsnummer: WO01044695

(56) Entgegenhaltungen:
- GB-A- 2 294 308
- US-A- 5 910 063

## Beschreibung

### Gebiet der Erfindung

Die Erfindung betrifft eine Schmiermittelzufuhr eines Planetentriebes entsprechend dem Oberbegriff des Anspruchs 1.

### Hintergrund der Erfindung

Planetentriebe sind in der Regel in Getrieben für Kraftfahrzeuge eingesetzt. Häufig sind in diesen Planetentrieben mehrere Planetensätze hintereinander geschaltet und miteinander gekoppelt. Die Planetenräder der Planetensätze sitzen drehbar auf Planetenbolzen gelagert. Die Planetenbolzen eines Satzes sind einseitig oder beidseitig an Planetenträgern oder Planetenstegen aufgenommen. Die Planetenräder sind mittels Lagerungen auf den Bolzen zum Teil gleit- aber hauptsächlich wälzgelagert.

Ein großes Problem stellt seit Bestehen der Planetentriebe die Schmierung der Lagerung und das Abführen von Reibungswärme durch das Schmiermittel dar. Als Schmiermittel wird in der Regel Schmieröl verwendet. Das Schmieröl wird oft aus Richtung der zentral im Planetentrieb angeordneten An- oder Abtriebswelle des Sonnenrades oder einer anderen zentral vom Planetentrieb ausgehenden Quelle, z. B. einer oder mehrerer Bohrungen, in den Planetentrieb geleitet. Von dort wird es durch die Fliehkraft über Kombinationen von Engstellen wie Spalten, Kanälen und Axial- bzw. Radiallagem sowie Leiteinrichtungen zu den einzelnen Schmierpunkten geleitet. Die einzelnen Engstellen erzeugen Strömungswiderstände und behindern den Öldurchfluss mehr oder weniger. Die der Quelle am nächsten liegenden Schmierpunkte sind in der Regel ausreichend versorgt, die den im Ölstrom der Quelle am nächsten liegenden Schmierpunkten folgenden Schmierpunkte sind benachteiligt, insbesondere dann, wenn sie wie die Lagerung der Planetenräder nur sehr schwer für Öl zugänglich sind.

Der Zulauf und das Abführen von Schmiermittel in die Lagerung der Planeten gestaltet sich schwierig, da die verbleibenden Spiele und Spaltmaße einer derartigen Konstruktion den Durchfluß des Schmiermittels be- oder verhindern. Die Lagerstelle ist über die Planetenbolzen, in denen sich ein längs der Achse des Bolzens erstreckendes Sackloch befindet, mit von dem Sackloch ausgehenden sowie in die Laufbahn der Lagerung mündenden Querbohrungen oder über spezielle in die Oberfläche des Planetenbolzens eingebrachte Nuten oder Aussparungen mit Schmiermittel versorgt. Das in die Lagerstelle des Planeten geleitete Öl soll dann durch die Fliehkraft an den Flanken des Planetenrades vorbei aus dem Lager zur nächsten Schmierstelle fließen.

Lagerungen von Planeten fallen während ihres Betriebes häufig vorzeitig aus, weil nicht genügend Öl zur Schmierung oder für die Abfuhr während des Betriebes in der Lagerung entstehenden Reibungswärme zur Verfügung steht.

Die ausreichende Versorgung der Lagerungen von Planeten ist in der Regel mit gesonderten konstruktiven Maßnahmen abgesichert. So wird nach dem Stand der Technik das durch die Fliehkraft in dem Planetentrieb von einer oder mehreren Quellen abgehende sowie nach außen geschleuderte Öl, z. B. mittels Leiteinrichtungen, aufgefangen und gezielt zu den Planetenlagerungen geleitet. Dabei wird oft der durch die Fliehkraft erzeugte Staudruck für einen besseren Öldurchsatz in der Lagerung benutzt. Es gibt Lösungen, bei der eine als Stauscheibe ausgebildete Leiteinrichtung das Öl auffängt und das unter einem Staudruck stehende Öl über spiralförmig in das Äußere des Planetenbolzens eingebrachte Ölnuten in die Lagerstelle leitet. Bei weiteren Varianten ist das Schmieröl an der dem Planetenträger zugewandten Seite des Planetens angestaut. Dazu ist der Plantenträger an seinem Innenumfang mit einer Phase versehen, die das Schmieröl auffängt. Das gestaute Öl wird dann über eine Leiteinrichtung, die durch in dem Planetenträger eingebrachte Prägungen gebildet ist, und durch spezielle Anlaufscheiben hindurch in die Lagerstelle geleitet.

Besonders schwierig gestaltet sich die Versorgung der Lagerungen der Planeten von Planetensätzen, die miteinander gekoppelt und/oder nacheinander in einen Planetentrieb angeordnet sind. Diese Planetensätze sind aus Gründen einer optimalen Funktion und wenig zur Verfügung stehenden Bauraumes auf engstem Raum mit wenig Zwischenräumen zueinander und zu anderen Bauteilen angeordnet. Die Planetensätze sind zumeist mittels eines Steges, eines Planetenträgers oder ähnlicher Wandungen voneinander getrennt. Für die Schmierung derartiger Planetensätze gibt es nach dem Stand der Technik im wesentlichen zwei verschiedene Wege.

So wird sich z. B. bemüht, derartige Planetenlager von der Quelle ausgehend möglichst direkt, ohne Zwischenschalten von anderen Strömungswiderständen, mit einem Ölstrom zu versehen. Dazu ist jede Planetenstufe mit einer separaten Quelle versehen. So ist in US 5,830,098 eine Lösung für eine Schmiermittelzufuhr eines Planetentriebes mit zwei Planetensätzen beschrieben, bei der die Planetensätze aus separaten von der Sonne ausgehenden Quellen mit Schmieröl versorgt werden. Die Zufuhr von Schmieröl für die Lagerungen der Planeten eines Planetensatzes ist durch die Wandung eines Leitbleches, eine Sackbohrung in jedem Planetenbolzen sowie von der Sackbohrung ausgehenden Querbohrungen gebildet. Das von dem Sonnenrad zugeführte Öl wird durch Fliehkräfte beaufschlagt an der Wandung des Leitbleches entlang in die Sackbohrung und von da aus in die Lagerstelle geleitet. Der andere Planetensatz weist ebenfalls ein Leitblech auf, dass den Ölstrom über Sackbohrungen und Querbohrungen in die Lagerstellen dieses Planetensatzes leitet.

Nicht alle Planetengetriebe gestatten aus konstruktiven Gründen die Versorgung der einzelnen Planetensätze aus separaten Quellen. Deshalb gibt es Lösungen, bei denen das Öl aus einer einzigen Quelle entweder zuerst die Lagerstelle in der Lagerung des Planeten des im Ölstrom vorgeschalteten Planetensatzes passiert und von dort in die Lagerstellen des nachgeschalteten Planetensatzes geführt ist oder zu den Lagerstellen beider Planetensätze zugleich, z. B. über einen gemeinsamen Versorgungskanal, geleitet wird.

Wenn das Öl aus einer einzigen Quelle zuerst die Lagerstellen der Lagerungen der Planeten des im Ölstrom vorgeschalteten Planetensatzes passiert und von dort in die Lagerstellen des im Ölstrom nachgeschalteten Planetensatzes geführt wird, ist die Schmierung der vorgeschalteten Lagerungen, zumeist eines Planetensatzes, zumindest unter Zuhilfenahme vorstehend beschriebener Leiteinrichtungen, noch ausreichend. Von diesen Lagerstellen gelangt das Öl allerdings nur schwer an die nachgeschalteten Lagerungen. Das Schmieröl verliert sich schon in den ersten Lagerungen oder wird aufgrund der Drosselwirkungen von engen Querschnitten in den Lagerungen nur in ungenügender Menge an die im Ölstrom nachgeschaltet liegenden Lagerstellen weitergeleitet. Behindert ist der Ölstrom oftmals auch durch die Wandungen der Planetenträger, die die einzelnen Planetensätze voneinander trennen. Das Schmieröl muss um diese Wandungen herum oder durch extra eingebrachte Öffnungen in den Wandungen geleitet werden. Die anfangs erwähnten Leiteinrichtungen sind bei diesen Lösungen für sich allein dann zumeist wirkungslos bzw. unzureichend, da nicht mehr genügend Schmieröl zur Verfügung steht, das angestaut und weitergeleitet werden kann.

Wenn das Schmieröl aus einer einzigen Quelle zu den Lagerstellen beider Planetensätze zugleich geleitet wird, passiert es häufig eine zentrale Zuleitung, die bis zu den Lagerstellen führt, und wird dort verteilt. Die Zuleitung führt oftmals über Bohrungen im Planetenträger zu einem Sackloch in einem gemeinsamen Planetenbolzen und wird dann über von dem Sackloch ausgehende Querbohrungen wieder zu den Lagerungen geleitet. Derartige Schmiermittelzufuhren sind nur mit aufwändigen und kostenintensiven fertigungstechnischem Aufwand zu realisieren.

*Das gattungsgemässe Dokument GB 2 294 308 A beschreibt eine Schmiermittelzufuhr für einen Planetentrieb, bei dem mittels Fliehkraft bewegtes Schmiermittel aus einer gemeinsamen Quelle zwei Planetensätze versorgen soll. Ein erster und ein zweiter Planetensatz sind dabei in Längsrichtung des Planetentriebes gesehen durch eine Wandung des Steges aus dem Planetentrieb voneinander getrennt nebeneinander angeordnet. Die Planetenbolzen des ersten Planetensatzes sind dabei an einem der Wandung gegenüberliegenden Steg aufgenommen. Die Planetenbolzen des zweiten Planetensatzes sitzen in der Wandung. Sowohl die Planetenbolzen des ersten Planetensatzes als auch des zweiten Planetensatzes sind mit in Längsrichtung verlaufenden Kanälen für die Beölung der Lagerung versehen. Von diesen Kanälen gehen Querkanäle zu den Lagerungen ab. Die Kanäle des zweiten Planetensatzes sind Sacklöcher und führen durch die Wandung hindurch. Sie sind zu einer Ölplatte aus Gummi geöffnet. Die Ölplatte aus Gummi ist mit radialen Ölnuten versehen, die radial über der Ölbohrung in der Getriebewelle angeordnet sind. Die Ölkanäle leiten das aus der Ölbohrung der Getriebewelle austretende und mit Fliehkraft radial nach außen gedrängte Öl zu den Kanälen des zweiten Planetensatzes. Die Kanäle des ersten Planetensatzes sind ebenfalls zu Ölkanälen an der Ölplatte geöffnet. Damit sind die Lagerungen des ersten Planetensatzes durch den von der Ölbohrung an der Getriebewelle die Ölkanäle passierenden und in die Kanäle des Planetenbolzens strömenden Ölstrom versorgt. Die Verteilung des aus der Ölbohrung der* Ge*triebewelle austretenden und die Leiteinrichtung passierenden Ölstromes ist vom ersten zum zweiten Planetensatz rein zufällig.*

Für Planetensätze, insbesondere durch die Wandung eines Planetenträgers getrennte Planetensätze, bei denen der Ölstrom von einer Quelle zu den Planetenlagerungen geführt werden muss, gab es bis zu dem Zeitpunkt, an dem die nachfolgend beschriebene Erfindung gemacht wurde, keine befriedigende Lösung.

### Zusammenfassung der Erfindung

Aufgabe der Erfindung ist es daher, eine Schmiermittelzufuhr eines Planetentriebes für das Zuführen von mittels Fliehkraft bewegten Schmiermittel zu Lagerungen von Planetenrädem eines ersten Planetensatzes auf ersten mit einem Ende an einer in eine Längsrichtung des Planetentriebes weisenden Seite eines Planetenträgers aufgenommenen Planetenbolzen und für das Zuführen des Schmiermittels zu Lagerungen von Planetenrädem eines durch zumindest eine Wandung des Planetenträgers vom ersten Planetensatz getrennten zweiten Planetensatzes zu schaffen, die einfach zu realisieren ist und sich kostengünstig herstellen lässt.

Diese Aufgabe ist nach dem Gegenstand des Anspruches 1 gelöst.

Mit einer derartigen Lösung gelangt das Schmiermittel, vorzugsweise Schmieröl, in ausreichender Menge zu den Lagerstellen der Lagerungen des ersten Planetensatzes sowie des zweiten Planetensatzes. Das Schmiermittel ist mittels der ersten Leiteinrichtung zu den einzelnen Planetenbolzen des ersten Planetensatzes geleitet. Der erste Planetensatz liegt dem zweiten Planetensatz im Schmiermittelstrom vorgeschaltet. Der Schmiermittelstrom wird in dem Kanal eines jeden Planetenbolzens des ersten Planetensatzes geteilt. Ein Teil des Schmiermittels fließt über den die Querkanäle zu den Lagerstellen der Lagerungen der Planetenräder des ersten Planetensatzes. Ein anderer Teil fließt in dem Kanal zur anderen Seite des Planetenträgers und tritt dort aus. Eine zweite Leiteinrichtung leitet das Schmiermittel von dort zu den Lagerungen des zweiten Planetensatzes. Über die Anzahl und die Gestaltung, insbesondere des Querschnittes, der Kanäle und Querkanäle ist die Menge des Schmiermittelstromes und das Verhältnis mit dem der Schmiermittelstrom auf die Lagerstellen des ersten Planetensatzes und des zweiten Planetensatzes aufgeteilt wird, festgelegt. Durch Änderungen an den Kanälen ist dieses Verhältnis, mit dem der Schmiermittelstrom auf die einzelnen Lagerstellen aufgeteilt wird, jederzeit beeinfluss- und somit veränderbar. Aufwändige und kostenintensive Querbohrungen in den Wandungen des Planetenträgers entfallen.

Eine bevorzugte Ausführungsform der Erfindung sieht vor, dass die erste Leiteinrichtung wenigstens eine ringförmig ausgebildete sowie konzentrisch zum Zentrum des Planetentriebes angeordnete Stauscheibe ist und die zweite Leiteinrichtung durch zumindest eine in die Wandung des Planetenträgers auf Seiten des zweiten Planetensatzes eingebrachte und sich von zumindest einem Kanal wenigstens radial nach außen in Richtung der Planetenbolzen des zweiten Planetensatzes erstreckenden Prägung sowie einem die Prägung zumindest teilweise in Längsrichtung abdeckenden Leitbleches gebildet ist. Die Planetenbolzen des zweiten Planetensatzes sind dabei mit einem Ende in der die Planetensätze trennenden Wandung des Planetenträger aufgenommen. Das zweite Leitblech ist z. B. an einem oder mehreren Planetenbolzen befestigt oder angeordnet und erstreckt sich zumindest radial nach innen in Richtung der Kanäle. Das Leitblech kann zum Beispiel durch eine entsprechend große Anlaufscheibe für ein oder mehrere Planetenräder des zweiten Planetensatzes gebildet sein. Die Prägung bildet an der dem zweiten Planetensatz zugewandten Seite der Wandung des Planetenträgers eine Vertiefung. Das Leitblech deckt diese Vertiefung seitlich ab und hält das aus dem Kanal heraustretende Schmiermittel in der Prägung. Durch die Fliehkraft wird das Schmiermittel in der Prägung radial nach außen geleitet und gelangt zu den Planetenbolzen des zweiten Planetensatzes. Von dort wird das Schmiermittel über z. B. Nuten im Planetenbolzen oder spezielle Anlaufscheiben in die Lagerstellen der Lagerungen der Planetenräder geleitet. Die Prägungen sind während der Herstellung des Planetenträgers spanlos einfach und kostengünstig einzubringen. Eine spanende Einarbeitung von leitenden Bahnen ist nicht notwendig.

Die Prägung ist in ihrer axialen und radialen Ausdehnung beliebig gestaltbar. Vorzugsweise ist sie jedoch als eine alle Kanäle verbindende Ringnut mit von der Ringnut radial nach außen in Richtung der Planetenbolzen abgehenden Nuten zu gestalten.

Schließlich sieht eine Ausgestaltung der Erfindung vor, dass der Kanal in dem ersten Planetenbolzen in Längsrichtung des Planetentriebes verläuft und durch ein bevorzugt konzentrisch zur Längsachse des Planetenbolzens angeordnetes zylindrisch ausgebildetes Loch gebildet ist. Ein derartiges Durchgangsloch kann durch Bohren eingebracht sein oder es ist von vornherein vorhanden, wenn ein solcher Planetenbolzen aus einem rohrförmigen Halbzeug gefertigt ist. Die Querkanäle sind als Querbohrungen ausgebildet oder eingestanzt Die Querschnitte, insbesondere der Kanäle, sind durch Kalibrieren sehr genau auf den erforderlichen Schmiermittelstrom und das anfangs erwähnte Verhältnis der Ausgestaltung abstimmbar.

### Kurze Beschreibung der Zeichnung

Die Erfindung wird nachfolgend anhand eines Ausführungsbeispieles näher erläutert:

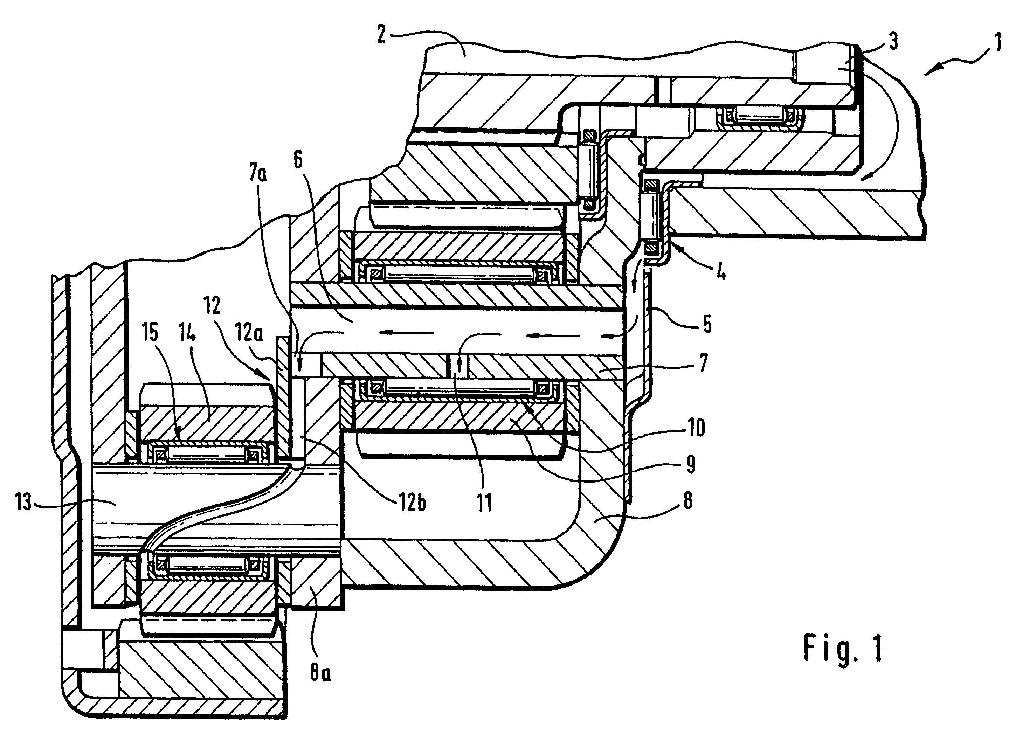

- Figur 1: zeigt ein Ausführungsbeispiel einer erfindungsgemäßen Schmiermittelzuführung im Schnitt.

### Detaillierte Beschreibung der Zeichnung

In Figur 1 ist ein Planetentrieb 1 teilweise und im Schnitt dargestellt. Von einer mit einem Sonnenrad gekoppelten Zentralwelle 2 gelangt Öl aus einer Öffnung 3 über ein Axiallager 4 radial nach außen zu einer ersten Leiteinrichtung 5. Die erste Leiteinrichtung 5 sammelt das Schmiermittel und leitet es zu einem als Durchgangsbohrung ausgeführten Kanal 6 eines ersten Planetenbolzens 7.

Der Planetenbolzen 7 ist in einem Planetenträger 8 aufgenommen und durchdringt eine Wandung 8a des Plantenträgers 8. Auf dem ersten Planetenbolzen 7 ist ein Planetenrad 9 eines aus weiteren Planetenrädern 9 gebildeten und nicht weiter dargestellten Planetensatzes mittels einer Lagerung 10 gelagert. Von dem Kanal 6 führt ein Querkanal 11 zur Lagerung 10. Der durch die erste Leiteinrichtung 5 in den Kanal 6 geleitete Schmiermittelstrom wird in dem Kanal 6 geteilt. Ein Teil des Schmiermittelstromes fließt über den Querkanal 11 in die Lagerung 10 des Planetenrades 9. Der andere Teil des Schmiermittelstromes fließt in dem Kanal 6 durch die Wandung 8a des Planetenträgers 8 und trifft am Ende des ersten Planetenbolzens 7 auf eine zweite Leiteinrichtung 12.

Die zweite Leiteinrichtung 12 ist durch ein Leitblech 12a und eine Prägung 12b gebildet. Die Prägung 12b erstreckt sich von dem Kanal 6 in Richtung eines zweiten Planetenbolzens 13. Auf dem zweiten Planetenbolzen 13 sitzt ein Planetenrad 14. Das Planetenrad 14 ist ein Rad eines nicht weiter dargestellten Planetensatzes, der aus weiteren auf zweiten Planetenbolzen 13 sitzenden Planetenrädern 14 gebildet ist. Das Leitblech 12a dient gleichzeitig als Anlaufscheibe für den axialen Anlauf des Planetenrades 14 an der Wandung 8a des Planetenträgers 8. Der erste Planetenbolzen 7 ist auf Höhe der Prägung 12b mit einer Aussparung 7a versehen. Das Schmiermittel bewegt sich durch Fliehkraft in der Prägung 12b an dem Leitblech 12a entlang zur Lagerung 15 des Planetenrades 14 auf dem zweiten Planetenbolzen 13.

### Bezugszahlenliste

- 1: Planetentrieb
- 2: Zentralwelle
- 3: Öffnung
- 4: Axiallager
- 5: erste Leiteinrichtung
- 6: Kanal
- 7: erster Planetenbolzen
- 7a: Aussparung
- 8: Planetenträger
- 8a: Wandung
- 9: Planetenrad
- 10: Lagerung
- 11: Querkanal
- 12: zweite Leiteinrichtung
- 12a: Leitblech
- 12b: Prägung
- 13: zweiter Planetenbolzen
- 14: Planetenrad
- 15: Lagerung

## Patentansprüche

1. Schmiermittelzufuhr eines Planetentriebes (1) für das Zuführen mittels Fliehkraft bewegten Schmiermittels zu Lagerungen (10) von Planetenrädem (9) eines ersten Planetensatzes auf ersten mit einem Ende an einer Wandung (8a) eines Planetenträgers (8) aufgenommenen ersten Planetenbolzen (7) und für das Zuführen des Schmiermittels zu Lagerungen (15) von Planetenrädern (14) eines zumindest in Längsrichtung durch die Wandung (8a) des Planetenträgers (8) vom ersten Planetensatz getrennten zweiten Planetensatzes, mit einer das Schmiermittel zu den ersten Planetenbolzen (7) leitenden ersten Leiteinrichtung (5), mit jeweils mindestens einem durch die Wandung führenden Kanal (6) in den ersten Planetenbolzen (7), mit jeweils mindestens einem von dem Kanal (6) ausgehenden und das Schmiermittel zur Lagerung (10) der Planetenräder (9) des ersten Planetensatzes führenden Querkanal (11) und mit einer dem zweiten Planetensatzes zugeordneten zweiten Leiteinrichtung (12), ***dadurch gekennzeichnet dass** der erste Planetensatz dem zweiten Planetensatz im Schmiermittelstrom vorgeschaltet ist, wobei die erste Leiteinrichtung (5) und die zweite Leiteinrichtung (12) mittels des Kanals (6) miteinander derartig verbunden sind, so dass zumindest ein Teil eines von der ersten Leiteinrichtung abgehenden sowie den Kanal (6) durchströmenden Stromens des Schmiermittels die zweite Leiteinrichtung (12) passierend zumindest zeitweise auf die Lagerungen (15) der Planetenräder (14) trifft*.

2. Schmiermittelzufuhr nach Anspruch 1, bei der die erste Leiteinrichtung (5) wenigstens eine ringförmig ausgebildete sowie konzentrisch zum Zentrum des Planetentriebes (1) angeordnete Stauscheibe ist und bei der die zweite Leiteinrichtung (12) zumindest durch wenigstens eine in die Wandung (8a) des Planetenträgers (8) auf Seiten des zweiten Planetensatzes eingebrachte sowie sich von jedem Kanal (6) wenigstens radial nach außen in Richtung zumindest eines zweiten Planetenbolzens (13) erstreckende Prägung (12b) und mindestens einem die Prägung (12b) zumindest teilweise in Längsrichtung abdeckenden Leitbleches (12a) gebildet ist, wobei die zweiten Planetenbolzen (13) jeweils mit einem Ende an dem Planetenträger (8) aufgenommen sind sowie jeweils mindestens eine Lagerung (15) der Planetenräder (14) des zweiten Planetensatzes aufnehmen und das Leitblech (12a) zumindest von einem zweiten Planetenbolzen (13) ausgeht und sich wenigstens radial nach innen in Richtung wenigstens eines der Kanäle (6) erstreckt.

3. Schmiermittelzufuhr nach einem der Ansprüche 1 oder 2, bei dem der Kanal (6) in Längsrichtung des Planetentriebes (1) verläuft und durch ein zylindrisch ausgebildetes Durchgangsloch gebildet ist.

## Claims

1. Lubricant feed system for a planetary gear drive (1) for feeding lubricant, that is moved by centrifugal force, to bearings (10) of planet gears (9) of a first set of planets on first planet shafts (7), one end of which is received on a wall (8a) of a planet carrier (8), and for feeding the lubricant to bearings (15) of planet gears (14) of a second set of planets that is separated at least in longitudinal direction from the first set of planets by the wall (8a) of the planet carrier (8), the system comprising a first guiding device (5) that guides the lubricant to the first planet shafts (7), each first planet shaft (7) comprising at least one channel (6) that extends through the wall, at least one transverse channel (11) starting from each channel (6) and guiding the lubricant to the bearing (10) of the planet gears (9) of the first set of planets, the system further comprising a second guiding device (12) for the second set of planets, **characterised in that** the first set of planets is arranged upstream of the second set of planets in the lubricant flow path, the first guiding device (5) and the second guiding device (12) are connected to each other through the channel (6), so that at least a portion of a lubricant stream leaving the first guiding device and flowing through the channel (6) passes the second guiding device (12) and reaches the bearings (15) of the planet gears (14) at least occasionally.

2. Lubricant feed system according to claim 1, in which the first guiding device (5) comprises at least one annular baffle plate that is arranged concentric to the centre of the planetary gear drive (1), and in which the second guiding device (12) is formed by at least one stamping (12b) made in the wall (8a) of the planet carrier (8) on the side on which the second set of planets is situated, said stamping (12b) extending at least radially outwards towards at least one second planet shaft (13), and at least one guide plate (12a) that at least partially covers the stamping (12b) in longitudinal direction, wherein one end of each second planet shaft (13) is received on the planet carrier (8) and each second planet shaft (13) receives at least one bearing (15) of the planet gears (14) of the second set of planets, and the guide plate (12a) starts from at least one second planet shaft (13) and extends at least radially inwards toward at least one of the channels (6).

3. Lubricant feed system according to one of the claims 1 or 2, in which the channel (6) extends in longitudinal direction of the planetary gear drive (1) and is defined by a cylindrical through-hole.

## Revendications

1. Alimentation en lubrifiant d'un train planétaire (1) pour amener un lubrifiant déplacé par force centrifuge vers des logements (10) de roues planétaires (9) d'un premier groupe planétaire sur des premiers axes planétaires (7) reçus par une extrémité sur la paroi (8a) d'un porte-satellites (8) et pour amener le lubrifiant à des logements (15) de roues planétaires (14) d'un deuxième groupe planétaire séparé du premier groupe planétaire au moins en direction longitudinale par la paroi (8a) du porte-satellites (8), avec une première installation de guidage (5) qui conduit le lubrifiant aux premiers axes planétaires (7), avec à chaque fois au moins un canal (6) - qui passe à travers la paroi - dans les premiers axes planétaires (7), avec à chaque fois au moins un canal transversal (11) qui part du canal (6) et qui conduit le lubrifiant au logement (10) des roues planétaires (9) du premier groupe planétaire et avec une deuxième installation de guidage (12) associée au deuxième groupe planétaire,
**caractérisée en ce que**
le premier groupe planétaire est monté en amont du deuxième groupe planétaire dans le courant de lubrifiant, la première installation de guidage (5) et la deuxième installation de guidage (12) étant liées l'une à l'autre au moyen du canal (6), de telle manière qu'au moins une partie d'un courant du lubrifiant qui part de la première installation de guidage et qui s'écoule par le canal (6) parvient au moins temporairement sur les logements (15) des roues planétaires (14) en passant par la deuxième installation de guidage (12).

2. Alimentation en lubrifiant selon la revendication 1,
dans laquelle
la première installation de guidage (5) est au moins une rondelle annulaire et concentrique par rapport au centre du train planétaire (1) et la deuxième installation de guidage (12) est au moins formée par au moins un estampage (12b) ménagé dans la paroi (8a) du porte-satellites (8) du côté du deuxième groupe planétaire et qui à partir de chaque canal (6) s'étend au moins radialement vers l'extérieur en direction d'au moins un deuxième axe planétaire (13), et par au moins une tôle de guidage (12a) qui recouvre l'estampage (12b) au moins partiellement en direction longitudinale, les deuxièmes axes planétaires (13) étant reçus sur le porte-satellites (8) par une extrémité et recevant à chaque fois au moins un logement (15) des roues planétaires (14) du deuxième groupe planétaire, alors que la tôle de guidage (12a) part au moins d'un deuxième axe planétaire (13) et s'étend au moins radialement vers l'intérieur en direction d'au moins un des canaux (6).

3. Alimentation en lubrifiant selon l'une des revendications 1 ou 2,
dans laquelle
le canal (6) s'étend en direction longitudinale du train planétaire (1) et est formé par un trou de passage conçu de façon cylindrique.
